Europäisches Patentamt

European Patent Office

Office européen des brevets

(11) Publication number: **0 170 459**
**B1**

# EUROPEAN PATENT SPECIFICATION

(45) Date of publication of patent specification: 03.10.90

(21) Application number: 85305013.6

(22) Date of filing: 12.07.85

(51) Int. Cl.⁵: **B 26 D 7/26, B 26 D 1/02,**
**B 26 D 7/06, B 26 D 7/24,**
**B 26 D 7/01**

(54) **Food-cutting apparatus.**

(30) Priority: 23.07.84 JP 111525/84
31.07.84 JP 117481/84
24.08.84 JP 128252/84

(43) Date of publication of application:
05.02.86 Bulletin 86/06

(45) Publication of the grant of the patent:
03.10.90 Bulletin 90/40

(84) Designated Contracting States:
DE FR GB IT

(56) References cited:
US-A-4 055 099

(73) Proprietor: CHUBU INDUSTRIES, INC.
463, Oaza-Moritada
Kuwana-shi Mie-ken (JP)

(72) Inventor: Himi, Kohei
No. 217-1, Niu-Gawakami Daian-cho
Inabe-gun Mie-ken (JP)
Inventor: Ando, Toshio
No. 207, Oaza-Nagao Fugiwara-cho
Inabe-gun Mie-ken (JP)

(74) Representative: Leale, Robin George et al
FRANK B. DEHN & CO. Imperial House 15-19
Kingsway
London WC2B 6UZ (GB)

EP 0 170 459 B1

Courier Press, Leamington Spa, England.

## Description

The present invention relates to a food-cutting apparatus for solid foods such as ice blocks, frozen fruits and the like.

Outline and enlarged views of parts of two types of conventional food-cutting apparatus are shown in Figs. 1 and 2 of the accompanying drawings, as to one type of such apparatus, and in Figs. 3, 4, 5A, 5B, 5C and 5D as to the other type.

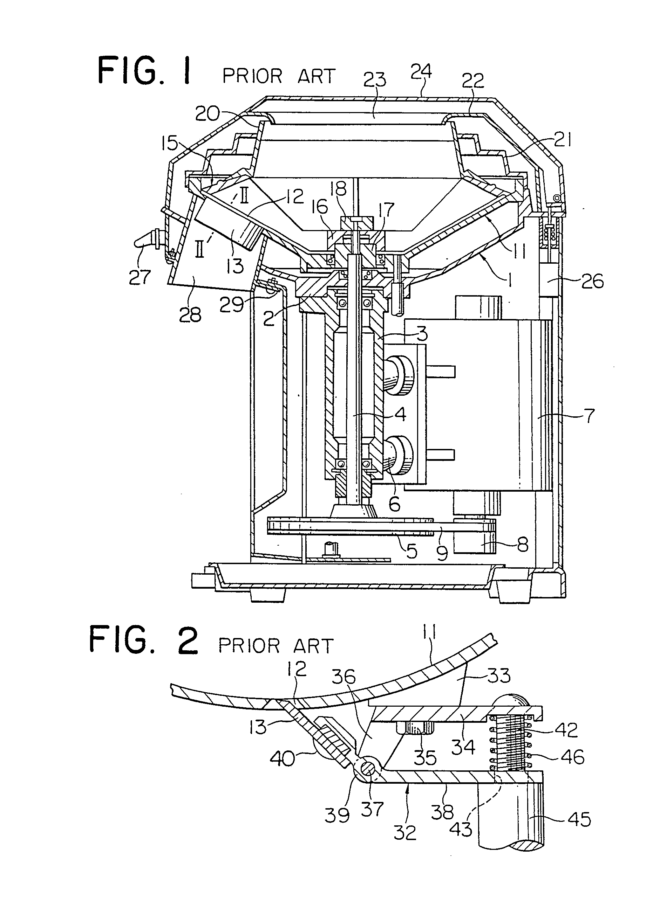

In the apparatus shown in Figs. 1 and 2, which is disclosed in our European Patent Application 85301225.0 (EP-A-0154471, which was not published before the filing date of the priority of the present application), at numeral 1 is an upper frame; 2 is a boss provided in a central portion of a back surface of the frame 1; 3 is a cylindrical shaft housing; 4 is a rotary shaft; 5 is a pulley fixed to a lower end of the rotary shaft 4; 6 is a supporting arm; 7 is a driving electric motor; 8 is a pulley mounted on a shaft of the electric motor 7; 9 is a belt running under tension around the pulleys 5 and 8; 11 is a cutting plate; 12 is an opening provided in the cutting plate 11; 13 is a cutting blade arranged to protrude at its front tip from the opening 12; 15 is a transfer rotor; 16 is a boss; 17 is a bush; 18 is a nut; 20 is a hopper; 21 is an anti-scatter cover disposed over the hopper 20; 22 is a head cover disposed above the anti-scatter cover 21; 23 is an opening provided at the top portion of the head cover 22; 24 is a lid for covering the opening 23; 26 is a safety switch; 27 is a main switch; 28 is a discharge chute; and 29 is a cover. (US-A-4055099 discloses an apparatus similar to that of figure 1.)

This food-cutting apparatus is so constructed that, when its food-cutting operation has finished, it is possible to wash out any residue of cut foods adhering to the transfer rotor 15 and the cutting plate 11, by opening the lid 24, removing in turn the head cover 22 and the anti-scatter cover 21, and then dismounting the transfer motor 15 and the cutting plate 11 from the frame 1.

On the other hand, Fig. 2 shows a cutting blade mounting portion 32 of this earlier apparatus. In this mounting portion 32, a supporting plate 34 is fixed to a back surface of the cutting plate 11, near the opening 12, through mounts 33 by means of bolts 35, and a pair of arms 36 are provided on the surface of the supporting plate 34 remote from the cutting plate 11, between the front ends of which arms 36 a supporting rod 37 is pivotally supported. The supporting rod 37 is mounted in a central boss portion 39 of a mounting plate 38 for the cutting blade 13, and the cutting blade 13 is fixed to a front bent portion of the plate 38 by means of bolts 40. Another bolt 42 has a threaded front portion thereof engaging with a female screw (not shown) of an adjusting knob 45 through an opening 43 provided in a rear portion of the mounting plate 38, to adjust the amount of the front tip of the cutting blade which protrudes through the opening 12 by rotating the adjusting knob 4 to thereby slightly rotate the plate 38 on the supporting rod 37. The reference numeral 46 designates a spring interposed between the supporting plate 34 and the mounting plate 38.

It is possible to dismount the thus constructed mounting means 32 for the cutting blade 13 together with the cutting plate 11 when the cutting plate 11 is dismounted in the above-mentioned manner. After that, though it would be desirable to wash out substances such as fruit juices, dust and the like adhering to the mutually facing inner surfaces of the mounting plate 38 and the supporting plate 34 after both of these members have been disassembled, it is not in fact possible to disassemble the two members 38, 34 because the supporting rod 37 cannot be released from between the arms 36. This leads to the incomplete removal of substances adhered to the members 38, 34, which can lead to insanitary conditions in the apparatus.

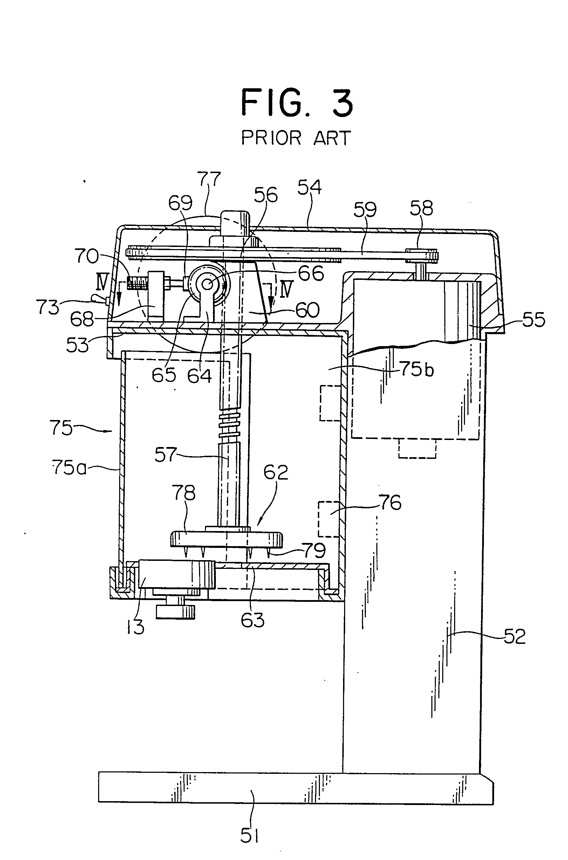

Referring now to the other known apparatus shown in Figs. 3, 4, 5A, 5B, 5C and 5D, which disclose the preamble of claim 1, reference numeral 51 designates a base on one side of which is mounted an upstanding supporting frame 52, at an upper portion of which is mounted an upper frame 53 extending laterally from the supporting frame 52. Within an upper portion of the supporting frame 52 an electric motor 55 is mounted. These frames 52 and 53 are covered by a head cover 54.

A main shaft 57, on an outer peripheral surface of which a worm is formed, is rotatably mounted on a supporting member 60 provided on the upper frame 53, and a pulley 56 is slidably connected to an upper portion of the main shaft 57 by means of a key or the like. A belt 59 runs under tension around pulley 56 and another pulley 58 mounted on a shaft of the electric motor 55.

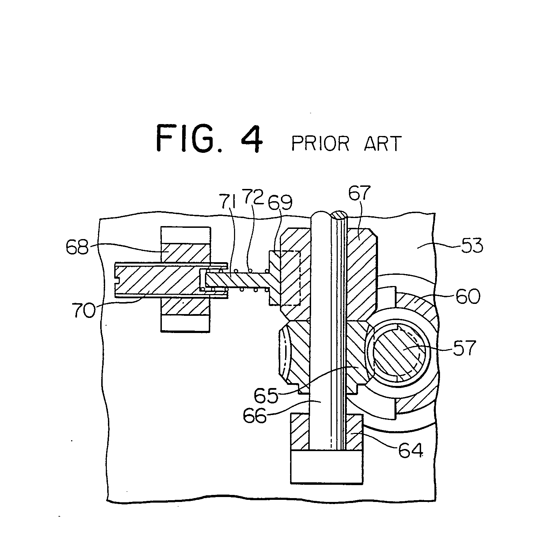

To a lower end of the main shaft 57 is attached a holding member 62, below which is disposed a cutting plate 63 to which a cutting blade 13 is detachably secured. A worm wheel 65 meshing with the worm of the main shaft 57 is fixed to a rotary shaft 66 which is rotatably supported by a supporting member 64 provided on the upper frame 3, adjacent to which worm wheel 65 a brake ring 67 (Fig. 4) is also fixed to the rotary shaft 66. On the upper frame 53 is mounted a supporting member 68 through which a threaded hole extends laterally. A screw shaft 70 is engaged in the hole, and a front end portion of the screw shaft 70 has a blind bore into which a small-diameter supporting shaft 71 of a brake shoe 69 is inserted. Around an outer periphery of the supporting shaft 71 a coil spring 72 is wound to press the brake shoe 69 on to the brake ring 67.

The numeral 73 designates a main switch for actuating the motor 55. 75 designates a lower cover provided between the upper frame 53 and the cutting plate 63 to enclose the cutting area, which cover 75 has its rear half portion 75b attached to the supporting frame 52 by means of mounting means 76, and its front half portion 75a, which is of smaller radius than the rear half portion 75b, inserted at its lower end in a concave groove provided in the cutting plate 63 to make it horizontally openable. Numeral 77 designates a manual operating handle fixed to an outwardly extending end of the rotary shaft 66.

In use of the above-described apparatus, in the condition shown in Fig. 3, first the worm wheel 65 is rotated by turning the rotary shaft 66 by the manual handle 77, to move the main shaft 57 up so as to form a space between the holding member 62 and the cutting plate 63. Then the lower cover 65 is opened to place a work-piece in the form of some food in the space just mentioned, and thereafter the holding member 62 is lowered, by rotating the handle 77 in the reverse direction, to pierce the food with holding pins 79 provided on the lower surface of the holding member 62. At this time, although a braking force (adjusted by rotating the screw shaft 70) is applied to the brake ring 67 through the brake shoe 69, the handle 77 can still be rotated manually against the braking force. As a result, it is possible to hold the holding member 62 in the position where the user stops turning the handle 77.

However, in this condition, if an unexpected downward force is applied to the main shaft 57, or if the user rotates the handle 77 by mistake to lower the holding member 62, there is strong possibility that the holding pins 79 would injure the user's fingers. This is a defect inherent in this known apparatus.

When cutting food with this apparatus, the motor 55 is actuated by turning on the main switch 73 after closing the lower cover 75, and the motor 55 then drives the main shaft through the pulleys 56, 58 and the belt 59. Since the worm wheel 65 is prevented from rotating by the braking force of the brake shoe 69, the main shaft 57 is lowered when rotated by the motor 55, to press downward and rotate the food by means of the holding member 62, so that the food is cut by the cutting blade 13. At this time the food resists the downward movement of the main shaft 57, and this resisting force is overcome when the worm wheel 65, meshing with the worm of the main shaft 57, is rotated by the driving force of the motor 55 against the braking force of the brake shoe 69.

During this cutting operation in the known apparatus, it is possible that the main switch 73 may be turned on when the lower cover 75 is still not closed completely, due for example to a user's carelessness and the user turning the main switch on by mistake. This can lead to an accident, for example from a piece of cut food striking a worker near the apparatus, or in a user's injury caused by his touching the holding member 62. This is another defect inherent in this known apparatus.

An object of the invention is to provide a food-cutting apparatus in which an accidental downward movement of the aforementioned holding member is prevented, by securing the holding down member in a upward position of its movement when desired.

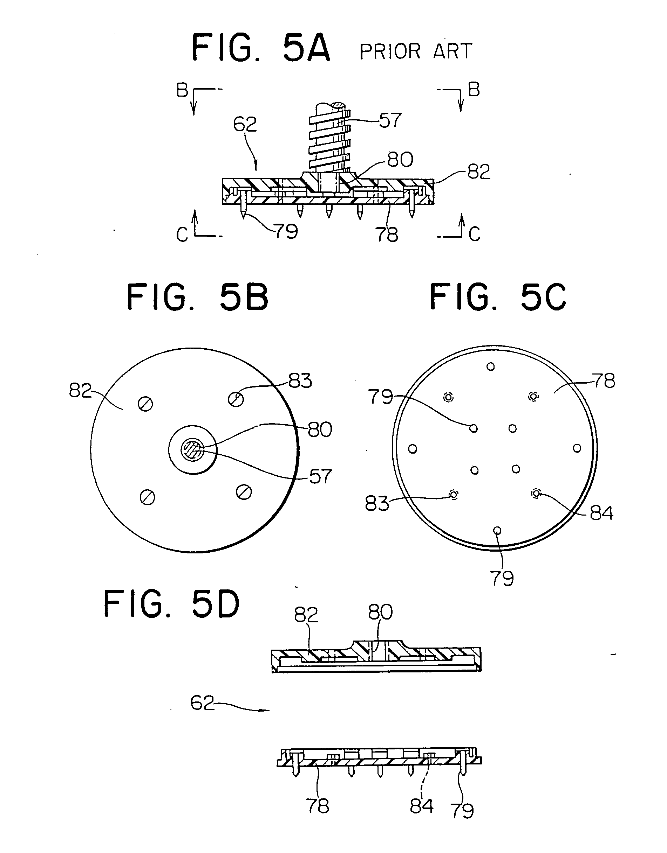

Figs. 5A, 5B, 5C and 5D show details of the holding member 62. As shown in the drawings there is a base plate 78, made of plastic, in which the holding pins 79 are integrally embedded when the base plate 78 is molded. In the example shown in the drawings, the total number of holding pins 79 is eight, four of which are provided in a radially inner portion of the base plate and remaining four of which are provided in a radially outer portion thereof. The total number of holdings pins 79 is not however restricted to eight only. Reference numerals 82 designates a cover fitted to the base plate 78, in a central portion of which cover is provided a threaded hole 80 with which a lower end of the main work shaft 57 engages. The cover 82 is secured to the base plate 78 by means of set screws 83 which engage in threaded holes 84.

Since the holding pins 79 are integrally embedded in the base plate 78 of the holding member 62, it is difficult to remove any food residue which adheres to the root portions of the holding pins 79 adjacent the underneath surface of the base plate 78, and to portions between the cover 82 and the base plate 78. This is yet another defect inherent in this known food-cutting apparatus.

Consequently, another object of the present invention is to provide a mounting means for a cutting blade of a food-cutting apparatus for solid foods, which mounting means enables a mounting plate for the cutting blade and a supporting plate to be disassembled from the apparatus so as to wash out substances adhered to the above-mentioned members, thereby to resolve or at least reduce the problems inherent in the known food-cutting apparatus.

Accordingly the present invention is characterised in that a supporting plate is fixed to said back surface of said cutting plate near to said opening and between said cutting plate and said mounting plate, said pair of arms being provided on an outer surface of said supporting plate, in that said mounting plate is mounted on said supporting rod by way of an engaging recess formed in a central portion of the mounting plate on the side of said supporting rod facing said supporting plate, spring means being interposed between said mounting plate and said supporting plate rearwardly of said engaging recess to urge said mounting plate into engagement with said supporting rod, and that the apparatus further comprises a stop means having a front end engaging portion engageable with said worm wheel, said stop means being so supported that said front end engaging portion is movable between a first position where it engages with said worm wheel and a second position where it does not; and a supporting member for said stop means, said supporting member being disposed on said upper frame.

With such an arrangement, since the supporting rod is engaged with the said recess at its side facing the supporting plate, and the width of the mounting plate is less then the spacing between the said pair of arms, the mounting plate can be pulled out of the apparatus once the cutting blade has been removed from the mounting plate and the adjusting means has also been removed. Consequently it is possible to completely wash away any substances adhered to the facing inner sides of the mounting plate and the supporting plate, when the cutting blade is being washed. This enables the apparatus to provide cut foods in a sanitary manner and to be assembled and disassembled easily and quickly, thereby to enhance the workability of the apparatus.

Thus, when the said holding down member is held in a stationary position, the stop means may be moved to the said first position to engage with the worm wheel so as to prevent the worm wheel from rotating, whereby up and down movement of the main shaft is prevented. On the other hand, when it is desired to move the main shaft up and down, the stop means may be moved to the said second position where the engagement between the stop means and the worm wheel is released to enable the worm wheel to rotate freely.

In one alternative embodiment of this form of the invention the said stop means includes a rod which is both rotatable and slidable in a hole extending through said supporting member, said front end engaging portion being formed at the front end of said rod and having an inclined end surface engageable with said worm wheel, behind which engaging portion is formed a flange, a coil spring being mounted around said rod between said flange and said supporting member to bias said rod towards said worm wheel, said rod being movable between said first and second positions wherein said inclined end surface is directed up and down respectively by rotation of said rod, and a stop pin on said rod which engages with a rear surface of said supporting member in said first position and said second position.

In another alternative embodiment the said stop means includes a rod which is both rotatable and slidable in a hole extending through said supporting member, said front end engaging portion being formed at the front end of said rod, a flange behind said engaging portion, a coil spring encircling said rod between said flange and said supporting member to bias said rod toward said worm wheel, and a transverse pin in a rear portion of said rod, said supporting member having an opening in a rear side thereof mounting a sleeve formed with a long slot in which said pin is insertable.

In either of these alternatives it is easy to effect engagement and disengagement between the stop means and the worm wheel and to stably hold the parts in the resultant condition thereof.

Another subsidiary object of the invention is to provide a food-cutting apparatus in which the electric motor cannot be actuated, thereby to prevent the holding member from rotating, when the lower cover is open. This may be accomplished by providing, at a lower end of said upper frame, a sub-switch for on-off operation controlled by opening and closing of said cover, which sub-switch is connected in series with said main switch in said control circuit for said electric motor. Then, since the sub-switch is turned off by opening the lower cover, the electric motor cannot be actuated even if the user turns on the main switch by mistake, and as a result the cutting operation cannot be started.

A further subsidiary object of the invention is to provide a food-cutting apparatus in which there is no fear of causing sanitary problems because food residue adhered to root portions of the holding pins adjacent the base plate, and also adhered between the cover and the base plate, can be easily removed. This may be accomplished by forming the holding member as a base plate, a plurality of holding pins and a cover, which base plate is provided with a plurality of through-holes in which said plurality of holding pins are inserted. Then, when it is desired to wash out the holding member, such member is first disconnected from the main shaft and thereafter disassembled into the base plate, the holding pins and the cover to enable such parts to be easily washed out.

Some embodiments of the invention will now be described by way of example and with reference to the accompanying drawings. in which:-

Fig. 1 is a vertical axial sectional view of one type of known food-cutting apparatus which belongs to the same technical field as that of the present invention;

Fig. 2 is an enlarged sectional view taken along the line II—II of Fig. 1;

Fig. 3 is a partial sectional view of another type of known food-cutting apparatus;

Fig. 4 is an enlarged cross-sectional view taken along the line IV—IV of Fig. 3;

Fig. 5A is a longitudinal sectional view of the holding member of the food-cutting apparatus shown in Fig. 3;

Fig. 5B is a cross-sectional view taken along the line B—B of Fig. 5A;

Fig. 5C is a bottom view of a holding member, taken along the line C—C of Fig. 5A;

Fig. 5D is an exploded longitudinal sectional view of the holding member shown in Fig. 5A;

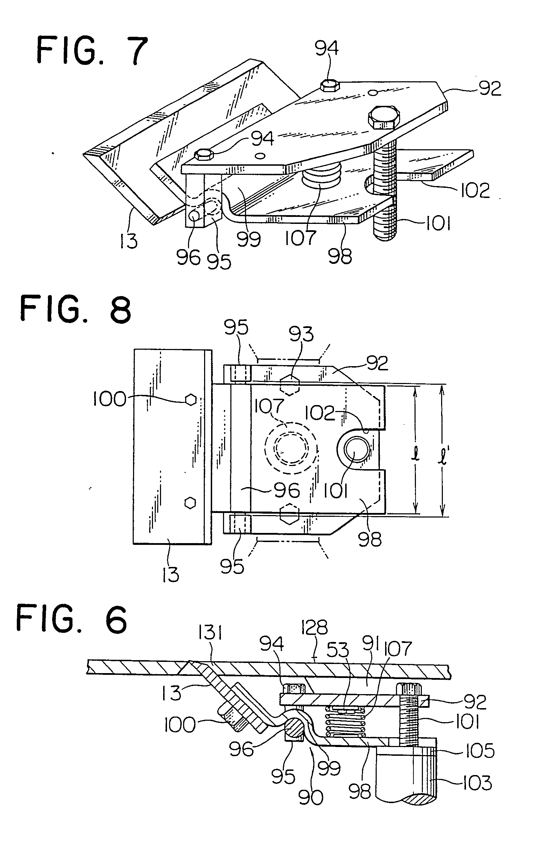

Fig. 6 is a sectional view, similar to Fig. 2, of the cutting mechanism of an embodiment of a food-cutting apparatus according to the present invention;

Fig. 7 is a perspective view of the mechanism shown in Fig. 6;

Fig. 8 is a bottom view of the mechanism shown in Fig. 7;

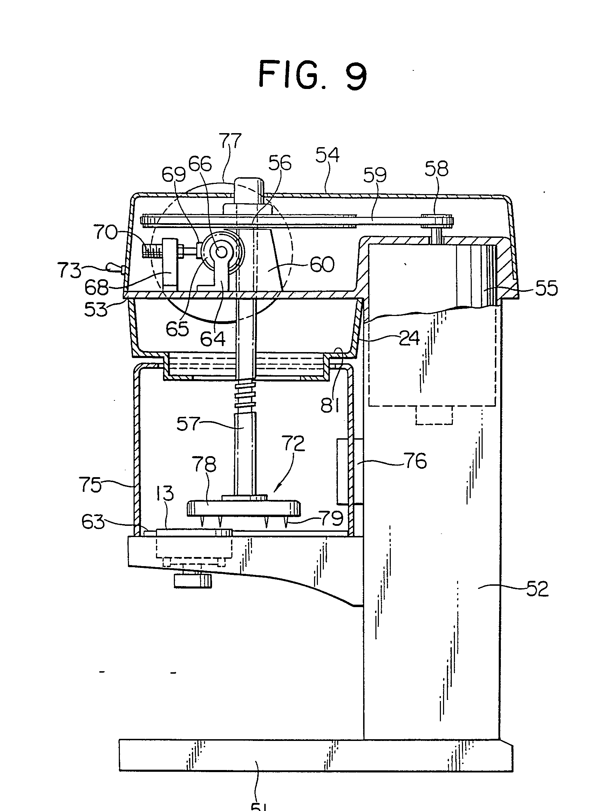

Fig. 9 is a partial sectional view, similar to Fig. 3, of an embodiment of a food-cutting apparatus of the present invention;

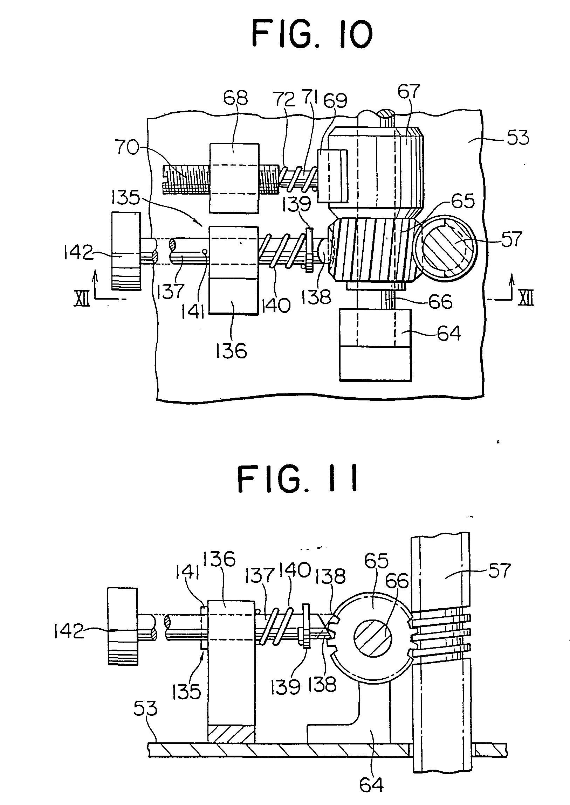

Fig. 10 is a plan view of a stop means employed in the apparatus shown in Fig. 9;

Fig. 11 is a longitudinal sectional view taken along the line XII—XII of Fig. 10;

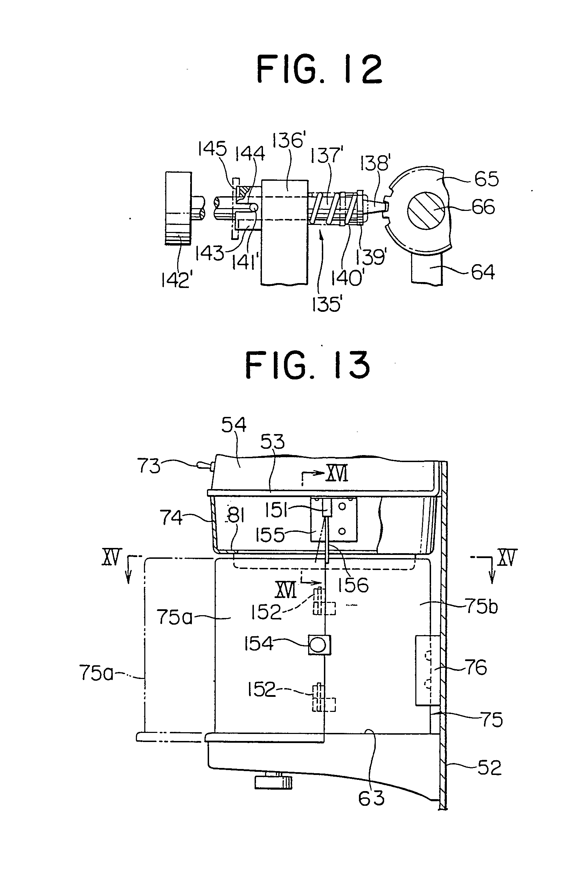

Fig. 12 is a longitudinal sectional view, similar to Fig. 11, of a modification of the stop means shown in Fig. 10;

Fig. 13 is a partial sectional front view of the lower cover and a sub-switch of the apparatus shown in Fig. 9;

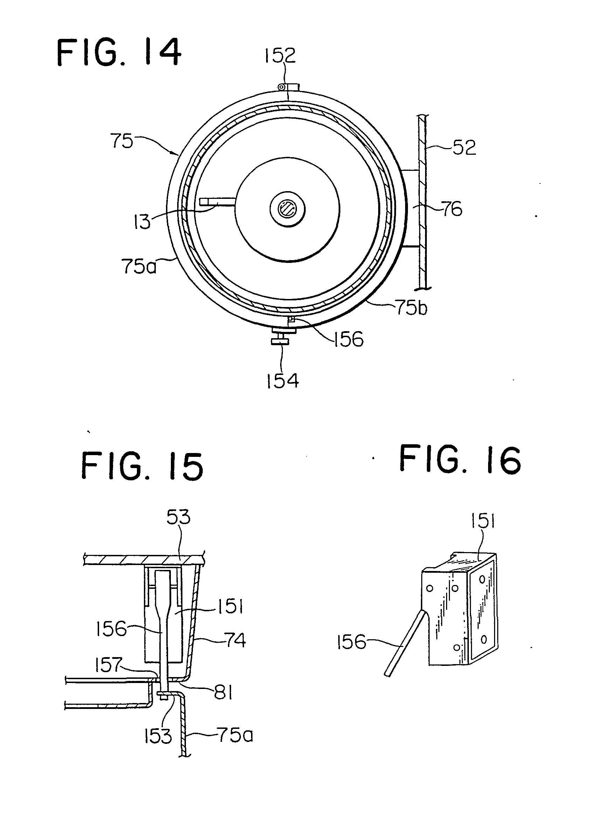

Fig. 14 is a cross-sectional view taken along the line XV—XV of Fig. 13;

Fig. 15 is a cross-sectional view taken along the line XVI—XVI of Fig. 13;

Fig. 16 is a perspective view of the sub-switch shown in Fig. 13;

Fig. 17A is a cross-sectional view of a holding member of the apparatus shown in Fig. 9;

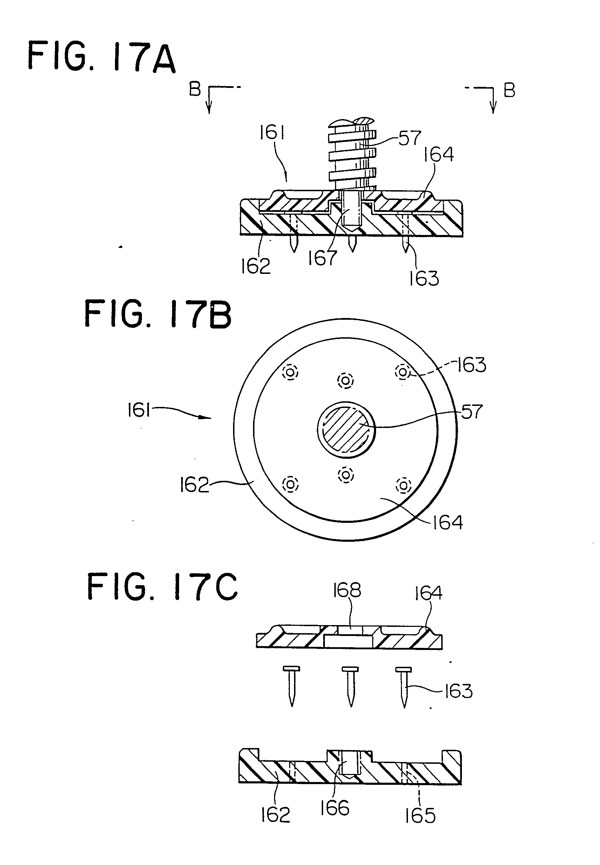

Fig. 17B is a plan view of the holding member shown in Fig. 17A; and

Fig. 17C is an exploded cross-sectional view of the holding member shown in Fig. 17A.

Referring first to Figs. 6 to 8, reference numeral 90 designates a mounting device for a cutting blade 13, the device 90 including a supporting plate 92 fixed to a back surface of a cutting plate 128, near to an opening 131 therein, by means of mounts 91 and bolts 93. A pair of arms 95 are fixed to the outside surface of the supporting plate 92 by means of bolts 94, between which arms 95 a supporting rod 96 is mounted by inserting its opposite ends into transverse holes provided in the arms 95. A circular arc-shaped engaging recess 99 formed in a central portion of a mounting plate 98 partly embraces the supporting rod 96 so that the plate 98 is pivotable on the supporting rod 96 acting as a center of rotation thereof. As shown in Fig. 8, since the width 1 of the mounting plate 98 is less than the spacing 1' between the arms 95, it is possible to pull the plate 98 out (leftward in Fig. 8) from its position between the pair of arms 95, by disengaging the recess 99 from the supporting rod 96.

The cutting blade 13 is releasably connected to a front bent portion of the mounting plate 98 by means of bolts 100. The supporting plate 92 carries a bolt 101 which threadedly engages with a female screw 106 of a sleeve 105 mounted in an end bore of an adjusting knob 103, via a notch 102 formed in a rear portion of the mounting plate 98. A spring 107 is interposed between the supporting plate 92 and the mounting plate 98 to urge the mounting plate 98 into engagement with the supporting rod 96. Rotation of the adjusting knob 103 adjusts the position of the cutting blade 13.

When it is desired to wash the inside surfaces of the mounting plate 98 and the supporting plate 92 to remove substances adhered thereto, the bolts 100 are first removed to dismount the cutting blade 13 from its mounting plate 98, and then the adjusting knob 103 is turned to disengage the bolt 102 from the sleeve 105. Then, when the spring 107 has been removed, it is possible to pull out the mounting plate 98 from its position between the arms 95, to separate the mounting plate from the supporting plate 92.

Incidentally, if it is also desired to dismount the supporting plate 92, this is done by releasing the bolts 93. The thus separated mounting plate 98 and the supporting plate 92 may then be washed and the apparatus re-assembled in the reverse sequence. Those parts of the mounting device 90 subject to washing are made of stainless steel.

Figs. 9 to 17C show an embodiment of a food-cutting apparatus according to the present invention. In these Figures, like reference numerals designate parts similar to those of the known food-cutting apparatus shown in Fig. 3 and already described above. Hereinafter, only those elements of the apparatus of the present invention which are different from those of the known apparatus will be described.

This embodiment of the present invention differs from the apparatus of Fig. 3 mainly in that it is provided with a stop means 135 (135'), a sub-switch 151, an improved construction of the lower cover 75, and a holding member 161 which replaces the known type of holding member 62.

Figs. 10 and 11 show details of the stop means 135. As shown a supporting member 136 is mounted on the upper frame 53 side by side with the supporting member 68, which frame 53 and member 68 have already been described above. A throughhole is formed in the supporting member 136, in which a rod 137 is rotatably and slidably fitted. As shown in Fig. 11, at a front end of the rod 137 there is an engaging portion 138 having an inclined surface which engages with the worm wheel 65 in the manner of a pawl. Behind the portion 138 a flange 139 is provided. A coil spring 140 acting between the flange 139 and the supporting member 136 biases the rod 137 towards the worm wheel 65. On a rear portion of the rod 137 a stop pin 141 is provided to abut on a back surface of the supporting member 136 when the engaging portion 138 engages with the worm wheel 65. At the rear end of the rod 137 a knob 142 is provided.

In Figs. 10 and 11 a first position where the stop means 135 engages with the worm wheel 65 is shown with solid lines. In this first position, under the biasing force exerted by the spring 140, the engaging portion 138 engages with the worm wheel 65, and the stop pin 141 abuts on the back surface of the supporting member 136, this being a stable condition. If it is required to change this condition, it is enough to pull the rod 137 rearward and to turn the same by a half-turn by means of the knob 142, so as to bring the engaging portion 138 to a second position shown with chain lines in Fig. 11, in which second position the engaging portion 138 is prevented from engaging with the worm wheel 65 and is held in that position by the stop pin 141.

Fig. 12 shows a modification 135' of the stop means 135. In the stop means 135', a sleeve 143 is mounted on a rear portion of a supporting member 136' to protrude therefrom, in which sleeve 143 a rod 137' having a worm wheel engaging portion 138' is slidably supported. A stop pin 141' is provided on a rear portion of the rod 137', which stop pin 141' is received in a long slot 144 in the sleeve 143. A recess 145 is formed in the rear end of the sleeve 143, which recess is spaced from the slot 144 by an angle of 90° around the axis of the sleeve 143. In this embodiment, a first position of the device is again shown with solid lines and a second position with chain lines.

When the stop pin 141' is inserted fully in the slot 144 the engaging portion 138' engages with the worm wheel 65 and the rod 137' is stably held in the first position. When it is desired to move the rod 137' to the second position, it is enough to pull the rod 137' rearward and turn the same by a half-turn by means of the knob 142' so as to engage the stop pin 141' in the recess 145 and thus to separate the engaging portion 138' from the worm wheel 65, as shown by chain lines. The rod 137' is stably held in the second position through the engagement of the stop pin 141' in the recess 145. Reference numerals 139' and 140' designate a flange and a coil spring, respectively.

Referring now to Figs. 13 to 16, these show details of the lower cover 75 and the sub-switch 151.

The lower cover 75 is similar to that of the Fig. 3 apparatus to the extent that it is formed by a pair of semi-cylindrical covers, one a front cover 75a and the other a rear cover 75b, and is fixed to the supporting frame 52 through mounting means 76 associated with the rear cover 75b. However, it differs from the known apparatus in that the front cover 75a is attached to the rear cover 75b through hinges 152 so as to be openable as shown in Fig. 13 with chain lines and solid lines. The front cover 75a is lockable to the rear cover 75b in its closed position by a mechanism which is not shown in the drawings. An inward curved flange 153 (Fig. 15) is formed at upper ends of both of the covers 75a, 75b, which flange 153 extends opposite a flange 81 of a middle cover 74 which forms a part of the upper frame 53. Lower ends of the cover 75a, 75b are disposed near the cutting plate 63. A knob 154 is provided for opening and closing the front cover 75a.

A sub-switch 151, for example a limit switch or the like, is connected with the main switch 3 in series in the control circuit for the motor 55. The sub-switch 151 is secured via a mounting plate 155 to a lower portion of the upper frame 53 above an upper portion of a free end of the front cover 75a, and is provided with an actuating lever 156 which is biased toward an off position indicated by a chain line in Fig. 13. As shown in Fig. 15, a lower end of the switch actuating lever 156 extends downward beyond the middle cover 74 through a hole 157 provided in the flange 81 thereof, to be engageable by the flange 153 of the front cover 75a. Consequently, the sub-switch 151 is turned off when the front cover 75a is opened so as to bring the lever 156 to the position indicated by the chain line in Fig. 13. As a result, the motor 55 is not actuated even if the main switch 73 is turned on. On the other hand, when the front cover 75a is closed, it is possible to actuate the motor 55 by turning on the main switch 73, since the sub-switch 151 is closed by the front cover 75a.

In use of the apparatus, the front cover 75a is first opened to place food on the cutting plate 63. At this time, there is no danger to the user even if he turns on the main switch 73 by mistake, because the sub-switch 151 is turned off by the opened front cover 75a. If the front cover 75a is opened by mistake during a cutting operation, since the sub-switch 151 is simultaneously turned off there is no danger to the user.

In the above described embodiment the sub-switch 151 is provided above the free end of the front cover 75a. However, it is possible to locate the sub-switch in any position where its actuating lever 156 is moved to the on position when the front cover 75a is closed. In other words the location of sub-switch 151 is not restricted to that of the above described embodiment.

Figs. 17A to 17C show details of the holding member 161. This member is formed by a base plate 162, a plurality of holding pins 163, and a cover 164. Although both the base plate 162 and the cover 164 are made of plastics, it is also possible to employ other suitable materials for them. The base plate 162 is formed with a plurality of small holes 165 in which holding pins 163 are inserted, and a threaded central hole 166 which is threadedly engaged with the main shaft 57. The cover 164 has a through-hole 168 for the passage of a threaded portion of the main shaft 57. In assembling the holding member 161, the holding pins 163 are first inserted into the small holes 165 of the base plate 162, and then the cover 164 is fitted in the upper portion of the base plate 162. After that, the threaded portion 167 of the main shaft 57 is screwed into the threaded central hole 166 of the base plate 162, through the hole 168 of the cover 164, and fastened thereto. Disassembling of the holding member 161 can be performed in reverse sequence with respect to the above assembling sequence of the same. Since the holding member 161 can thus be easily assembled and disassembled, it is possible to wash all of its parts in a simple manner.

## Claims

1. A food-cutting apparatus wherein a cutting blade (13) is disposed on a back surface of a cutting plate (11) so that its front tip may protrude through an opening (12) in the cutting plate (11), comprising a mounting plate (98) for said cutting blade (13) rotatably mounted on a supporting rod (96) interposed and supported between a pair of arms (95) extending away from said cutting plate (11), the width of said mounting plate (98) being less than the spacing between said pair of arms (95), and an adjusting means (103) for adjusting the degree of protrusion of the cutting blade (13); and wherein said apparatus further comprises a supporting frame (52) mounted in an upright position on a base (51); an upper frame (53) fixed to a front surface of said supporting frame (52) to extend laterally; a rotary main shaft (57) carried by said upper frame (53) for up and down movement and provided with a holding member (72) for a work-piece at its lower end; a worm wheel (65) meshing with a worm formed on said main shaft (57); a brake ring (67) and a handle (77) for moving said main shaft (57) up and down, both of which are provided on a rotary shaft (66) carrying said worm wheel (65); a brake shoe (69) engaging said brake ring (67) for controlling rotation of said worm wheel (65); a cover (75) for enclosing a cutting area above said cutting plate (63), said cover (75) being openable horizontally; an electric motor (55) for driving said main shaft (57) in rotation; a main switch (73) provided in a control circuit for said electric motor (55); characterised in that a supporting plate (92) is fixed to said back surface of said cutting plate (11) near to said opening (12) and between said cutting plate (11) and said mounting plate (98), said pair of arms (95) being provided on an outer surface of said supporting plate (92); in that said mounting plate (98) is mounted on said supporting rod (96) by way of an engaging recess (99) formed in a central portion of the mounting plate (98) on the side of said supporting rod (96) facing said supporting plate (92), spring means (107) being interposed between said mounting plate (98) and said supporting plate (92) rearwardly of said engaging recess (99) to urge said mounting plate (98) into engagement with said supporting rod (96), and in that said apparatus further comprises a stop means (135, 135') having a front end engaging portion (138) engageable with said worm wheel (65), said stop means (135, 135') being so supported that said front end engaging portion (138) is movable between a first position where it engages with said worm wheel (65) and a second position where it does not; and a supporting member (136, 136') for said stop means (135, 135'), said supporting member (136, 136') being disposed on said upper frame (53).

2. Apparatus as claimed in claim 1, characterised in that said stop means (135, 135') includes a rod (137, 137') which is both rotatable and slidable in a hole extending through said supporting member (136, 136'), said front end engaging portion (138, 138') being formed at the front end of said rod (137, 137') and having an inclined end surface engageable with said worm wheel (65), behind which engaging portion is formed a flange (139, 139'), a coil spring (140, 140') being mounted around said rod (137, 137') between said flange (139, 139') and said supporting member (136, 136') to bias said rod (137, 137') towards said worm wheel (65), said rod (137, 137') being movable between said first and second positions wherein said inclined end surface is directed up and down respectively by rotation of said rod (137, 137'), and a stop pin (141, 141') on said rod (137, 137') which engages with a rear surface of said supporting member (136, 136') in said first position and said second position.

3. Apparatus as claimed in claim 1, characterised in that said stop means (135') includes a rod (137') which is both rotatable and slidable in a hole extending through said supporting member (136'), said front end engaging portion (138') being formed at the front end of said rod (137'), a flange (139') behind said engaging portion (138'), a coil spring (140') encircling said rod (137') between said flange (139') and said supporting member (136') to bias said rod (137') toward said worm wheel (65), and a transverse pin (141') in a rear portion of said rod (37'), said supporting member (136') having an opening in a rear side thereof mounting a sleeve (143) formed with a long slot (144) in which said pin (141') is insertable.

4. Apparatus as claimed in any of claims 1 to 3, characterised in that at a lower end of said upper frame (53) is provided a sub-switch (151) for on-off operation controlled by opening and closing of said cover (75), which sub-switch (151) is connected in series with said main switch (73) in said control circuit for said electric motor (55).

5. Apparatus as claimed in any preceding claim, characterised in that said holding down member (161) is formed by a base plate (162), a plurality of holding pins (163) and a cover (164), which base plate (162) is provided with a plurality of through-holes (164) in which said plurality of holding pins (163) are inserted.

**Patentansprüche**

1. Lebensmittelschneidevorrichtung, bei der ein Schneidemesser (13) auf einer Rückseite einer Schneidplatte (11) angeordnet ist, so daß sein vorderes Ende durch eine Öffnung (12) in der Schneidplatte (11) vorstehen kann, aufweisend eine Grundplatte (98) für das Schneidemesser (13), die drehbar an einer Tragstange (96) angebracht ist, die zwischen einem Paar von sich von der Schneidplatte (11) fort erstreckenden Armen (95) angeordnet und gehaltert ist, wobei die Breite der Grundplatte (98) geringer als der Zwischenraum zwischen dem Paar von Armen (95) ist, und eine Einstelleinrichtung (103) zum Einstellen des Vorstehgrades des Schneidmessers (13), und wobei die Vorrichtung weiter einen Tragrahmen (52) aufweist, der in einer aufrechten Position auf einer Basis (51) angebracht ist; einen oberen Rahmen (53), der an einer Vorderseite des Tragrahmens (52) befestigt ist, so daß er sich seitlich erstreckt; eine Hauptdrehwelle (57), die von dem oberen Rahmen (53) zur Auf- und Abwärtsbewegung getragen ist und mit einem Halteelement (62) für ein Werkstück an seinem unteren Ende versehen ist; ein Schneckenrad (65), das mit einer auf der Hauptwelle (57) ausgebildeten Schnecke ineinandergreift; einen Bremsring (67) und einen Handgriff (77) zur Aufwärts- und Abwärts- bewegung der Hauptwelle (57); wobei beide auf einer das Schneckenrad (65) tragenden Drehwelle (66) vorgesehen sind; eine mit dem Bremsring (67) in Eingriff stehende Bremsbacke (69) zur Steuerung der Drehung des Schneckenrades (65); eine Abdeckung (75) zum Umschließen eines Schneidbereiches oberhalb der Schneidplatte (63), wobei die Abdeckung (75) in horizontaler Richtung öffenbar ist; einen Elektromotor (55) zum Antreiben der Hauptwelle (57) in Rotation; einen in einem Steuerkreis vorgesehenen Hauptschalter (73) für den Elektromotor (55); dadurch gekennzeichnet, daß eine Tragplatte (92) an der Rückseite der Schneidplatte (11) in der Nähe der Öffnung (12) und zwischen der Schneidplatte (11) und der Grundplatte (98) befestigt ist, wobei das Paar von Armen (95) auf einer Außenseite der Tragplatte (92) vorgesehen ist, daß die Grundplatte (98) an der Tragstange (96) mittels einer Eingriffsaussparung (99) angebracht ist, die in einem zentralen Abschnitt der Grundplatte (98) auf der Seite der Tragstange (96) gegenüberliegend der Tragplatte (92) gebildet ist, wobei eine Federeinrichtung (107) zwischen der Grundplatte (98) und der Tragplatte (92) auf der Rückseite der Eingriffsaussparung (99) angeordnet ist, um die Grundplatte (98) in Eingriff mit der Tragstange (96) zu drücken, und daß die Vorrichtung weiter eine Anschlageinrichtung (135, 135'), die einen mit dem Schneckenrad (65) in Eingriff bringbaren Vorderend-Eingriffsabschnitt (138) besitzt, wobei die Anschlageinrichtung (135, 135') so gehaltert ist, daß der Vorderend-Eingriffsabschnitt (138) zwischen einer ersten Position, wo er mit dem Schneckenrad (65) in Eingriff steht, und einer zweiten Position bewegbar ist, wo er dies nicht tut; und ein Tragelement (136, 136') für die Anschlageinrichtung (135, 135') aufweist, wobei das Tragelement (136, 136') am oberen Rahmen (53) angeordnet ist.

2. Vorrichtung nach Anspruch 1, dadurch gekennzeichnet, daß die Anschlageinrichtung (135, 135') eine Stange (137, 137') enthält, die in einem sich durch das Tragelement (136, 136') erstreckenden Loch drehbar und auch verschiebbar ist, wobei der Vorderend-Eingriffsabschnitt (138, 138') am vorderen Ende der Stange (137, 137') gebildet ist und eine geneigte Endfläche besitzt, die mit dem Schneckenrad (65) in Eingriff bringbar ist, hinter diesem Eingriffsabschnitt ein Flansch (139, 139') gebildet ist, wobei eine Schraubenfeder (140, 140') um die Stange (137, 137') zwischen dem Flansch (139, 139') und dem Tragelement (136, 136') angebracht ist, um die Stange (137, 137') zum Schneckenrad (65) hin vorzuspannen, wobei die Stange (137, 137') zwischen der ersten und der zweiten Position bewegbar ist, wobei die geneigte Endfläche jeweils durch Drehung der Stange (137, 137') nach oben und nach unten gerichtet ist, und einen Anschlagstift (141, 141') an der Stange (137, 137'), die mit einer rückwärtigen Fläche des Tragelementes (136, 136') in der ersten Position und der zweiten position in Eingriff steht.

3. Vorrichtung nach Anspruch 1, dadurch gekennzeichnet, daß die Anschlageinrichtung (135') eine Stange (137'), die in einem sich durch das Tragelement (136') erstreckenden Loch drehbar und auch verschiebbar ist, wobei der Vorderend-Eingriffsabschnitt (138') am Vorderende der Stange (137') gebildet ist, einen Flansch (139') hinter dem Eingriffsabschnitt (138'), eine die Stange (137') zwischen dem Flansch (139') und dem Tragelement (136') umgebende Schraubenfeder (140') zum Vorspannen der Stange (137') zum Schneckenrad (65) hin und einen Querstift (141') in einem rückwärtigen Abschnitt der Stange (137') enthält, wobei das Tragelement (136') eine Öffnung in seiner einen Rückseite besitzt, wobei eine Hülse (143) angebracht ist, die mit einem Langschlitz (144) gebildet ist, in den der Stift (141') einsetzbar ist.

4. Vorrichtung nach einem beliebigen der Ansprüche 1 bis 3, dadurch gekennzeichnet, daß am unteren Ende des oberen Rahmens (53) ein Hilfsschalter (151) zur Ein-Aus- Betätigung, gesteuert durch Öffnen und Schließen der Abdeckung (75), vorgesehen ist, dieser Hilfsschalter (151) in Reihe mit dem Hauptschalter (73) im Steuerkreis für den Elektromotor (55) angeschlossen ist.

5. Vorrichtung nach einem beliebigen vorhergehenden Anspruch, dadurch gekennzeichnet, daß das Herunterhalteelement (161) durch eine Basisplatte (162), eine Anzahl von Haltestiften (163) und eine Abdeckung (164) gebildet ist, diese Basisplatte (162) mit einer Anzahl von durchgehenden Löchern (164) versehen ist, in die die Anzahl von Haltestiften (163) eingesetzt ist.

**Revendications**

1. Appareil de coupe d'aliments, dans lequel une lame de coupe (13) est disposée sur une face arrière d'une plaque de coupe (11) afin que son extrémité avant puisse dépasser à travers une ouverture (12) formée dans la plaque de coupe (11), comprenant une plaque de montage (98) de la lame de coupe (13) qui est montée afin qu'elle puisse tourner sur une tige de support (96) placée entre deux bras (95) qui la supportent et qui dépassent de la plaque de coupe (11), la largeur de la plaque de montage (98) étant inférieure à la distance comprise entre les deux bras (95), et un dispositif (103) de réglage de la distance dont dépasse la lame de coupe (13); l'appareil comportant en outre un châssis de support (52) monté en position verticale sur une base (51); un châssis supérieur (53) fixé à une surface avant du châssis de support (52) afin qu'il dépasse latéralement; un arbre rotatif principal (57) porté par le châssis supérieur (53) afin qu'il puisse se déplacer vers le haut et vers le bas et ayant un organe de maintien (72) d'une pièce à son extrémité inférieure; une roue tangente (65) qui est en prise avec une vis formée sur l'arbre principal (57); une bague de freinage (67) et une poignée (77) destinée à déplacer l'arbre principal (57) vers le haut et vers le bas, la bague et la poignée étant toutes deux disposées sur un arbre rotatif (66) qui porte la roue tangente (65); un patin de freinage (69) placé au contact de la bague de freinage (67) et destiné à commander la rotation de la roue tangente (65); un couvercle (75) destiné à entourer une zone de coupe au-dessus de la plaque de coupe (63), le couvercle (75) pouvant être ouvert horizontalement; un moteur électrique (55) destiné à entraîner l'arbre principal (57) en rotation; et un interrupteur principal (73) placé dans un circuit de commande du moteur électrique (55); caractérisé en ce qu'une plaque de support (92) est fixée à la surface arrière de la plaque de coupe (11) près de ladite ouverture (12) et entre la plaque de coupe (11) et la plaque de montage (98), les deux bras (95) étant disposés sur une surface externe de la plaque de support (92), en ce que la plaque de montage (98) est montée sur la tige de support (96) par utilisation d'une cavité de coopération (99) formée dans une partie centrale de la plaque de montage (98) du côté de la tige de support (96) qui est tourné vers la plaque de support (92), un ressort (107) étant placé entre la plaque de montage (98) et la plaque de support (92) en arrière de la cavité de coopération (99) afin que la plaque de montage (98) soit repoussée au contact de la tige de support (96), et en ce que l'appareil comporte en outre un dispositif d'arrêt (135, 135') ayant une partie de coopération d'extrémité avant (138) pouvant venir au contact de la roue tangente (65), le dispositif d'arrêt (135, 135') étant supporté de manière que la partie de coopération d'extrémité avant (138) soit mobile entre une première position dans laquelle elle est au contact de la roue tangente (65) et une seconde position dans laquelle elle n'est pas à son contact; et un organe de support (136, 136') du dispositif d'arrêt (135, 135'), ce dispositif de support (136, 136') étant disposé sur le châssis supérieur (53).

2. Appareil selon la revendication 1, caractérisé en ce que le dispositif d'arrêt (135, 135') comporte une tige (137, 137') qui peut à la fois tourner et coulisser dans un trou traversant l'organe de support (136, 136'), la partie de coopération d'extrémité avant (138, 138') étant formée à l'extrémité avant de la tige (137, 137') et ayant une surface inclinée d'extrémité pouvant venir au contact de la roue tangente (65), un flasque (139, 139') étant formé derrière la partie de coopération, un ressort hélicoïdal (140, 140') étant monté autour de la tige (137, 137') entre le flasque (139, 139') et l'organe de support (136, 136') afin que la tige (137, 137') soit rappelée vers la roue tangente (65), la tige (137, 137') étant mobile entre la première et la seconde position dans lesquelles la surface inclinée d'extrémité est dirigée vers le haut et vers le bas respectivement, par rotation de la tige (137, 137'), et un ergot d'arrêt (141, 141') monté sur la tige (137, 137') et placé au contact d'une surface arrière de l'organe de support (136, 136') dans la première position et dans la seconde position.

3. Appareil selon la revendication 1, caractérisé en ce que le dispositif d'arrêt (135') comporte une tige (137') qui peut à la fois tourner et coulisser dans un trou traversant l'organe de support (136'), la partie de coopération d'extrémité avant (138') étant formée à l'extrémité avant de la tige (137'), un flasque (139') disposé derrière la partie de coopération (138'), un ressort hélicoïdal (140') entourant la tige (137') entre le flasque (139') et l'organe de support (136') afin que la tige (137') soit rappelée vers la roue tangente (65), et un ergot transversal (141') placé dans une partie arrière de la tige (37'), l'organe de support (136') ayant une ouverture dans sa face arrière pour le montage d'un manchon (143) formé avec une longue fente (144) dans laquelle l'ergot (141') est adapté pour pénétrer.

4. Appareil selon l'une quelconque des revendications 1 à 3, caractérisé en ce qu'une extrémité inférieure du châssis supérieur (53) comporte un interrupteur auxiliaire (151) dont l'état marche-arrêt est commandé par l'ouverture et la fermeture du couvercle (75), l'interrupteur auxiliaire (151) étant monté en série avec l'interrupteur principal (73) dans le circuit de commande du moteur électrique (55).

5. Appareil selon l'une quelconque des revendications précédentes, caractérisé en ce que l'organe (161) d'appui et de maintien est formé par une plaque de base (162), par plusieurs ergots de maintien (163) et par un couvercle (164), la plaque de base (162) ayant plusieurs trous débouchants (164) dans lesquels sont introduits les ergots de maintien (163).

FIG. 1 PRIOR ART

FIG. 2 PRIOR ART

# FIG. 3
PRIOR ART

# FIG. 4 PRIOR ART

FIG. 5A  PRIOR ART

FIG. 5B

FIG. 5C

FIG. 5D

# FIG. 7

# FIG. 8

# FIG. 6

# FIG. 9

# FIG. 10

# FIG. 11

# FIG. 12

# FIG. 13

# FIG. 14

# FIG. 15

# FIG. 16

# FIG. 17A

# FIG. 17B

# FIG. 17C